# FASCICULE DE BREVET EUROPEEN

(11) **EP 3 304 022 B1**
(45) Date de publication et mention de la délivrance du brevet: **03.11.2021**
(21) Numéro de dépôt: 16728901.6
(22) Date de dépôt: 03.06.2016
(51) Int. Cl.: G01L 15/00, G01L 27/00

(54) **DISPOSITIF DE MESURE DE PRESSION À FIABILITÉ AMÉLIORÉE ET PROCÉDÉ DE CALIBRAGE ASSOCIÉ**
DRUCKMESSVORRICHTUNG MIT VERBESSERTER ZUVERLÄSSIGKEIT UND ZUGEHÖRIGES KALIBRIERUNGSVERFAHREN
PRESSURE-MEASURING DEVICE WITH IMPROVED RELIABILITY AND ASSOCIATED CALIBRATION METHOD

(30) Priorité: 03.06.2015 FR 1555042
(43) Date de publication de la demande: 11.04.2018
(73) Titulaire: Safran Electronics & Defense, 75015 Paris (FR)
(72) Inventeur: RIOU, Jean-Christophe, 77550 Moissy-Cramayel (FR); BAILLY, Eric, 77550 Moissy-Cramayel (FR)
(74) Mandataire: Prouvez, Julien
(86) Numéro de dépôt international: PCT/EP2016/062731
(87) Numéro de publication internationale: WO 2016/193484

(56) Documents cités:
- EP-A2- 1 970 688
- WO-A1-87/07947
- WO-A1-2007/031516
- WO-A2-2008/036705
- DE-U1-202014 103 355
- US-A- 4 222 277
- US-A- 4 995 014

## Description

### DOMAINE DE L'INVENTION

La présente invention concerne le domaine de la mesure de pression et plus particulièrement les capteurs électromécaniques de pression de fluide pour des applications aéronautiques, et notamment les capteurs de type MEMS.

### ARRIERE PLAN DE L'INVENTION

Un capteur de pression électromécanique comprend généralement une membrane en silicium ou en alliage de silicium sur la face avant de laquelle sont rapportées des jauges de déformation piézoélectriques montées en pont de Wheatstone et reliées à une unité électronique de traitement par des fils de connexion. La face arrière opposée à celle portant les jauges est soumise à une pression à mesurer qui, en déformant la membrane, sollicite les jauges et permet d'effectuer une mesure électrique de la pression. La membrane est généralement montée sur un substrat lui aussi en silicium. Le silicium étant particulièrement sensible aux attaques électrochimiques, la membrane est montée à une extrémité d'une conduite remplie d'un fluide de transfert, généralement de l'huile silicone. L'autre extrémité du conduit est fermée par une pastille en acier inoxydable dont la face extérieure est en contact avec le fluide dont la pression est à mesurer. La pression appliquée sur la pastille en acier inoxydable est transmise, par l'intermédiaire du fluide de transfert, à la membrane de silicium et mesurée par l'unité de traitement à partir des signaux fournis par les jauges de déformation. Le signal électrique engendré par l'unité de traitement est ensuite transmis à un réseau de communication.

Le capteur ainsi obtenu est généralement encombrant, lourd et couteux, notamment en raison de la présence du conduit rempli d'huile et des éléments d'étanchéité associés. En effet, l'huile doit être absolument incompressible, et de telles huiles sont chères et se figent à basse température au point de transmettre les vibrations. Dans les cas où elles ne sont pas totalement exemptes d'impuretés et/ou de radicaux libres, ces huiles sont génératrices de dérives électriques lorsqu'elles sont soumises à une tension électrique. Le remplissage du conduit cylindrique doit être effectué de manière extrêmement rigoureuse car la présence d'air dans le conduit rendrait le capteur imprécis, voire inopérant. Cette opération et son contrôle alourdissent les coûts de production du capteur. La membrane du capteur est généralement rapportée sur le support du capteur par collage ou brasage. Cette jonction doit être étanche pour éviter toute intrusion de fluide sous la membrane, ce qui ruinerait à terme le capteur. Une telle opération souffre de la variabilité liée à une réalisation manuelle et est une source récurrente de défaut. Enfin, un tel capteur est extrêmement sensible aux variations rapides de température du fluide dont la pression est à mesurer. En effet, bien que les capteurs piézoélectriques soient notoirement connus pour présenter une sensibilité réduite aux variations de température, les comportements du fluide de transfert et du conduit induisent des erreurs difficiles à compenser. Pour finir, à des températures extrêmement basses, le fluide de transfert peut figer et rendre le capteur inopérant.

Les capteurs résistifs requièrent un étalonnage régulier afin de conserver un niveau de précision acceptable, notamment en raison de leur sensibilité thermique. L'étalonnage d'un capteur piézoélectrique requiert généralement de connecter un dispositif de mesure étalonné à ses bornes et donc de pouvoir accéder physiquement au capteur. Une telle opération requiert d'immobiliser l'équipement sur lequel le capteur est monté, ce qui entraine des temps d'immobilisation préjudiciables particulièrement dans le cas de capteurs montés sur des aéronefs. Enfin, un défaut de fonctionnement d'un capteur piézoélectrique peut être difficile à distinguer d'un défaut du circuit de transmission. Il est alors nécessaire de prévoir des systèmes locaux de surveillance du fonctionnement.

Il est connu du document US4995014 un dispositif de mesure de pression comprenant un capteur de pression résistif et un capteur de pression piézoélectrique montés sur un support commun pour être soumis à une même pression à mesurer.

### OBJET DE L'INVENTION

L'objet de l'invention est de réduire le coût et la sensibilité thermique d'un dispositif électromécanique de mesure de pression tout en en améliorant la fiabilité et la précision.

### RESUME DE L'INVENTION

A cet effet, on prévoit, selon l'invention, un dispositif de mesure de pression selon la revendication 1.

Il est alors possible d'exploiter les propriétés spécifiques de chaque capteur, notamment lorsqu'ils présentent des sensibilités réduites à certains paramètres environnementaux tels que la température, l'humidité, la vitesse, la force centrifuge ou d'autres types de sollicitations. Cette configuration particulière permet de proposer un dispositif dont seule la face opposée au capteur de premier type peut être soumise au fluide dont la pression est à mesurer. Le second canal interne réalise également un filtrage du fluide et empêche que des poussières ou des particules portées par le fluide puissent se placer au niveau de la membrane et perturber la mesure de capacité par modification locale du milieu diélectrique. Avantageusement, le capteur de pression du premier type et le capteur de pression du deuxième type ont des modes de défaillance différents.

Comme les modes de défaillance sont différents, une différence de mesure significative entre les capteurs est révélatrice d'une défaillance d'un des capteurs. Une différence de mesure sera considérée comme étant significative lorsqu'elle est supérieure à l'erreur attendue de mesure de chaque capteur.

Selon un mode de réalisation particulier, le capteur de pression du premier type et le capteur de pression du deuxième type ont des plages de précision différentes. Ainsi, il est possible d'exploiter les plages spécifiques de précision des divers types de capteurs. De façon avantageuse, dans le cas où l'un des capteurs est de type capacitif et le second est de type résistif, les mesures effectuées par le capteur capacitif sont faiblement influencées par la température du fluide dont la pression est mesurée. Le capteur résistif, quant à lui, permet des mesures indépendantes des forces inertielles auxquelles il est soumis, ce qui est particulièrement avantageux dans le cas de capteurs de pression de roues.

Une bonne compacité du dispositif de mesure peut être obtenue en montant une unité de traitement sur le support commun et en la reliant aux capteurs de pression du premier type et du deuxième type. Ce mode de réalisation permet également de réaliser les jonctions des capteurs avec l'unité de traitement de manière automatisée en usine plutôt que les réaliser manuellement lors du montage du dispositif, ce qui permet de réduire les opérations sensibles de montage et concourt à réduire les coûts d'installation du dispositif.

Avantageusement, le capteur de pression du premier type et le capteur de pression du deuxième type sont montés respectivement sur des faces opposées du support commun. Cette configuration permet d'utiliser des modes de protection (revêtement, bouclier) adaptés aux spécificités des capteurs en traitant chaque surface dans leur intégralité.

L'unité de traitement peut alors être montée sur la première face du support commun à proximité d'un des capteurs et recevoir le même traitement de protection que celui-ci.

Avantageusement encore, une des faces du support commun comprend au moins une portion recouverte de parylène ou d'un revêtement carboné de type DLC (de l'anglais « Diamond Like Carbon »). Ces revêtements permettent d'assurer une protection efficace des capteurs dans le cas de la mesure de pression de fluides corrosifs ou en milieu agressif.

Selon un mode de réalisation particulier, un des capteurs de pression est enfermé sous un couvercle hermétique solidaire du support commun. Ceci permet de définir et isoler la portion de la surface de support portant ce capteur qui est soumise à la pression du fluide dont la pression est à mesurer.

Un des capteurs de pression, voire les deux, peut être relié à des moyens de communication sans fil, ce qui permet d'en réaliser l'interrogation à distance sans devoir procéder à un démontage quelconque et permet alors de réduire les temps d'immobilisation. La faible consommation électrique des capteurs de type capacitif se prête particulièrement bien à un tel mode de communication.

L'invention concerne également un procédé de calibrage d'un tel dispositif de mesure de pression comprenant au moins un capteur de pression d'un premier type et un capteur de pression d'un deuxième type montés sur un même support, le procédé comprenant l'étape de comparer la mesure faite par un des capteurs avec une mesure de la même pression faite par l'autre capteur. Ainsi, il est possible de procéder à un calibrage en temps réel de chacun des capteurs en retenant la mesure d l'un ou de l'autre des capteurs selon que l'on se trouve dans une situation dans laquelle il est connu que la mesure d'un capteur est plus fiable que celle d'un autre.

Le procédé pourra également comprendre une étape supplémentaire d'émettre une alerte d'intégrité dans le cas où une comparaison des mesures réalisées par chacun des capteurs permet de soupçonner que l'un de ceux-ci est défectueux.

### BREVE DESCRIPTION DES DESSINS

Il sera fait référence aux dessins annexés parmi lesquels :
- la figure 1 est une vue schématique en coupe d'un dispositif de mesure de pression ne faisant pas partie de l'invention ;
- la figure 2 est un logigramme des différentes étapes d'un procédé de calibrage selon l'invention ;
- la figure 3 est une vue identique à celle de la figure 1 d'un premier mode de réalisation d'un dispositif de mesure de pression selon l'invention ;
- la figure 4 est une vue identique à celle de la figure 1 d'un deuxième mode de réalisation d'un dispositif de mesure de pression selon l'invention.

### DESCRIPTION DETAILLEE DE L'INVENTION

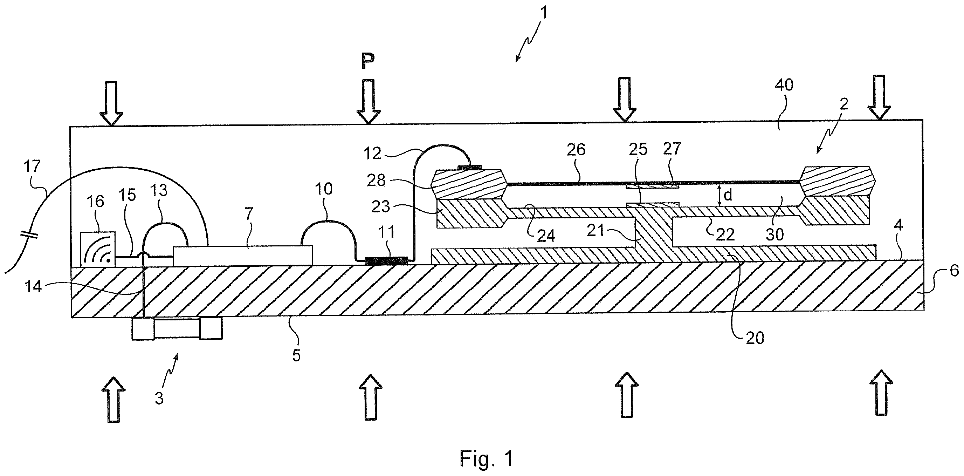

En référence à la figure 1, un dispositif de mesure de pression ne faisant pas partie de l'invention, généralement désigné 1, comprend un capteur de pression 2 de type capacitif et un capteur de pression 3 de type piézoélectrique respectivement montés sur une première face 4 et une deuxième face 5, opposée, d'un support 6 commun. Le support 6 est ici, en silicium et reçoit sur sa première face 4 une unité de traitement 7 reliée à l'aide d'un premier fil conducteur 10 à une extrémité d'une piste conductrice 11 imprimée sur la surface 4. Le premier fil conducteur 10 a une deuxième extrémité opposée qui est reliée à un deuxième fil conducteur 12 connecté au capteur 2. Un troisième fil conducteur 13 relie l'unité de traitement 7 à une piste conductrice interne 14 qui traverse le support 6 depuis la première face 4 jusqu'à la deuxième face 5 et relie le capteur 3 à l'unité de traitement 7.

L'unité de traitement 7, ici une unité intégrée de type ASIC (de l'anglais « Application Specific Integrated Unit »), est agencée pour délivrer un signal électrique en fonction des valeurs d'impédance (résistance du capteur 3, capacité du condensateur 2) mesurées aux bornes des capteurs 2 et 3. L'unité de traitement 7 est également agencée pour réaliser des opérations logiques sur les impédances mesurées. L'unité de traitement 7 est également reliée par un quatrième fil conducteur 15 à un module Bluetooth 16 et par un cinquième fil conducteur 17 à un circuit extérieur de transmission filaire (non représenté).

La première face 4 du support 6 reçoit un revêtement 40 de parylène qui recouvre alors le capteur 2, les fils conducteurs 10, 12, 13 et 15 ainsi que l'unité de traitement 7 et le module Bluetooth 16. Les revêtements carbonés de type DLC - de l'anglais « Diamond Like Carbon »- sont également adaptés à la protection de la première face 4 du support 6, du capteur 2, des fils conducteurs 10, 12, 13 et 15 ainsi que de l'unité de traitement 7 et du module Bluetooth 16.

Le capteur 2 a la forme d'un cylindre droit et comprend une base 20 solidaire du support 6. Un pied 21 central s'étend en saillie de la base 20 pour rejoindre la première face 22 d'un substrat 23 en silicium. Le substrat 23 comprend, sur sa deuxième face 24 opposée à la première face 22, une première électrode 25 et une membrane déformable 26 qui s'étend en regard et à une distance d de la deuxième face 24 du substrat 23. La membrane déformable 26 est en silicium et comprend une électrode 27 s'étendant en regard de l'électrode 25.

La membrane déformable 26 comprend un renflement 28 périphérique, de forme annulaire, présentant une portion plane de jonction en sa partie inférieure en contact avec la deuxième face 24 du substrat 23. La membrane déformable 26, son renflement 28 et la deuxième face 24 du substrat 23 définissent une enceinte étanche 30 qui entoure la première électrode 25. L'enceinte étanche 30 est à une pression absolue sensiblement nulle.

En fonctionnement, le dispositif de mesure de pression 1 est placé dans le fluide dont la pression P est à mesurer. La pression P s'exerce alors sur le capteur capacitif 2 et sur le capteur piézoélectrique 3 au travers du revêtement 40. Sous l'effet de la pression P, la membrane 26 se déforme et la distance d séparant la première électrode 25 de la deuxième électrode 27 varie. L'impédance Z2 (essentiellement capacitive) du condensateur formé par le couple d'électrodes 25, 27 est alors modifiée et transmise à l'unité de traitement 7 via les fils conducteurs 10, 12 ainsi que la piste conductrice 11. La piste conductrice interne 14 permet à l'unité de traitement 7 de mesurer l'impédance Z3 (essentiellement résistive) du capteur piézoélectrique 3. L'unité de traitement 7 convertit alors ces valeurs en un ou plusieurs signaux électriques qu'elle peut transmettre à un circuit de transmission filaire via le fil conducteur 17 ou par communication sans fil à l'aide du module Bluetooth 16.

Le pied 21 laisse libre la dilatation thermique du capteur 2, ce qui atténue les sollicitations thermomécaniques et permet de réduire la sensibilité thermique du dispositif 1.

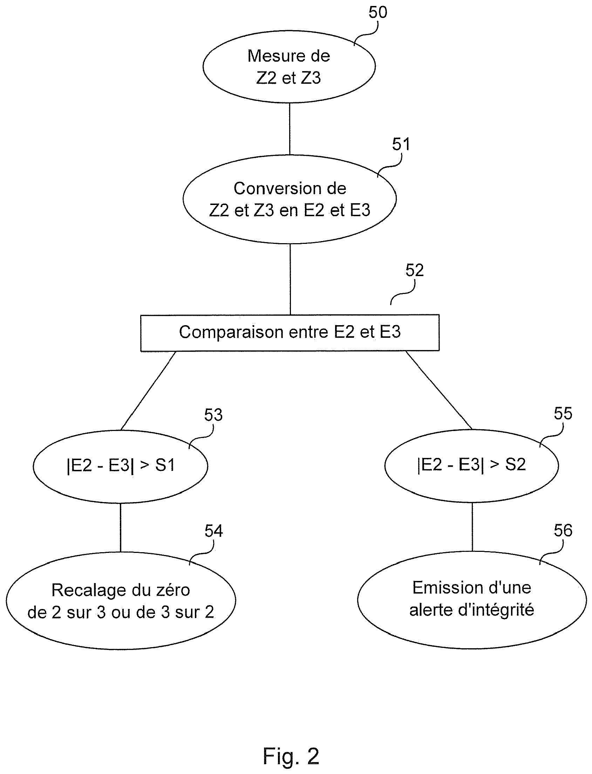

En référence à la figure 2, l'unité de traitement 7, après avoir réalisé les mesures des impédances Z2 et Z3 respectives des capteurs 2 et 3 (étape 50), convertit celles-ci respectivement en des signaux électriques E2 et E3 représentatifs de la pression mesurée (étape 51). En situation de vol, dans laquelle le capteur piézoélectrique 3 est censé être le plus fiable, l'unité de traitement 7 compare le signal E2 avec le signal E3 (étape 52). Si la différence entre les valeurs E2 et E3 est supérieure à un premier seuil SI (étape 53), la valeur du signal E2 issu du capteur piézoélectrique 3 est utilisée pour recaler le zéro du capteur capacitif 2 (étape 54). Si la différence entre les valeurs E2 et E3 est supérieure à un deuxième seuil S2 (étape 55), l'unité de traitement 7 émet alors une alerte d'intégrité 57 (étape 56). Cette alerte d'intégrité 57 peut être émise sous la forme d'un signal Bluetooth via le module Bluetooth 16 ou transmise au circuit de transmission filaire par le fil conducteur 17.

Bien évidemment, le procédé peut également être mis en œuvre dans d'autres situations (températures très hautes, très basses, aéronef au sol, en roulage, etc...) dans lesquelles l'un ou l'autre des capteurs 2 et 3 est retenu comme référence pour étalonner ou détecter une défaillance.

Les éléments identiques ou analogues à ceux précédemment décrits porteront une référence numérique identique à ceux-ci dans la description qui suit des premier et deuxième modes de réalisation de l'invention.

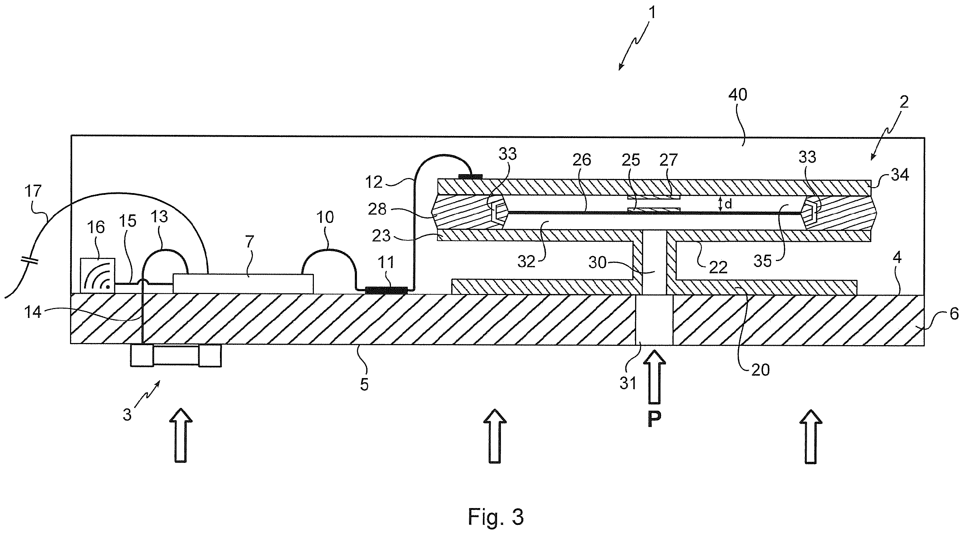

En référence à la figure 3, le capteur 2 comprend, ici, un premier canal interne 30 qui s'étend dans le pied 21 depuis un orifice 31 de la deuxième face 5 du support 6 et qui traverse la base 20 ainsi que le support 6 pour alimenter deux deuxième canaux 33 s'étendant au travers du renflement 28. Les deuxièmes canaux 33 ont préférentiellement un diamètre compris entre 10 et 50 microns. Très préférentiellement le diamètre des deuxièmes canaux 33 est compris entre 10 et 20 microns. Enfin, de manière préférée, les deuxièmes canaux 33 ont un diamètre sensiblement égal à 10 microns. Préférentiellement, le ratio entre le diamètre du premier canal interne 30 et celui des deuxièmes canaux 33 est compris entre 30 et 50. Très préférentiellement, le ratio entre le diamètre du premier canal interne 30 et celui des deuxièmes canaux 33 est sensiblement égal à 50.

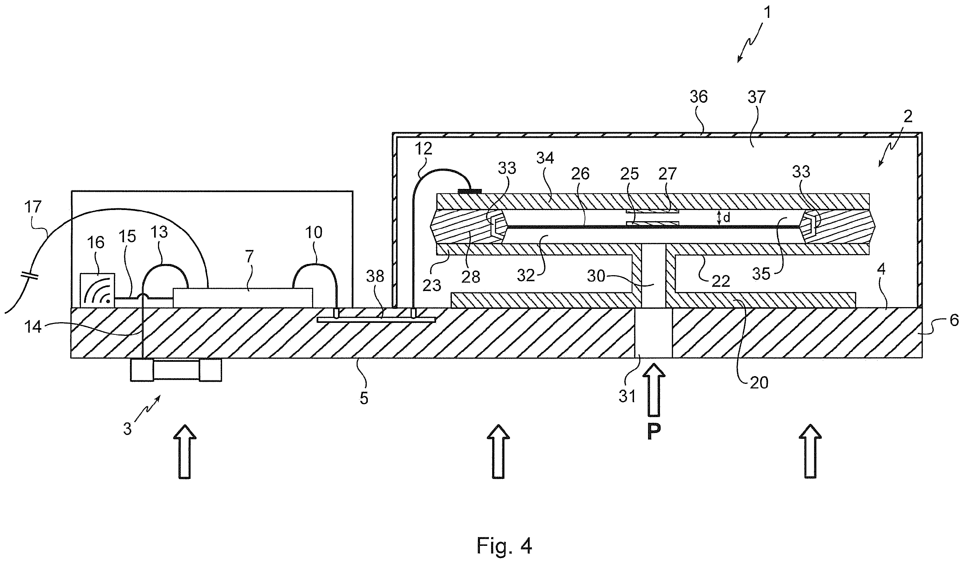

Un couvercle 34 vient en contact avec une portion supérieure plane de jonction de la membrane 26 et s'étend en regard de celle-ci. Le couvercle 34 délimite alors avec le renflement 28 et la membrane 26 une enceinte étanche 35 dans laquelle débouche les canaux 33. La première face 4 du support 6 reçoit un revêtement de parylène qui recouvre alors également le capteur 2, les fils conducteurs 10, 12, 13 et 15 ainsi que l'unité de traitement 7 et le module Bluetooth 16. Alternativement, et comme représenté en figure 4, le capteur 2 peut être entouré par un capot métallique 36 solidaire de la première face 4 du support 6 définissant une enceint étanche 37 autour du capteur 2. L'enceinte 37 peut être à une pression absolue sensiblement nulle ou remplie d'un gaz neutre tel que de l'azote. La portion de la face 4 du support 6 comprenant l'unité de traitement 7 est, quant à elle, recouverte de parylène. Dans ce cas, la piste conductrice 11 est remplacée par une piste conductrice interne 38 s'étendant dans le support 6.

Cette configuration du dispositif de mesure 1 dans laquelle le capteur 2 est alimenté en fluide sous pression via l'orifice 31 permet de ne soumettre qu'une seule des deux faces du support 6 à la pression du fluide à mesurer (ici la face 5) tout en réalisant des mesures qui mettent en œuvre les capteurs 2 et 3 situés sur ses deux faces 4 et 5.

Au sens de la présente demande, le terme électrode désigne tout élément électriquement conducteur. Il couvre alors un élément rapporté sur un substrat ou une membrane ainsi qu'une portion de substrat ou de membrane (voire son intégralité) disposant des propriétés électriques lui permettant de définir une électrode de condensateur. Une membrane en céramique au moins en partie conductrice est donc une électrode au sens de la présente demande.

Bien entendu, l'invention n'est pas limitée aux modes de réalisation décrits mais englobe toute variante entrant dans le champ de l'invention telle que définie par les revendications.

En particulier :
- bien qu'ici le substrat du capteur soit en silicium, l'invention s'applique également à d'autres types de substrat comme par exemple un substrat en alliage de silicium, en céramique multicouches à cuisson simultanée à haute température (HTCC) ou en céramique multicouches à cuisson simultanée à basse température (LTCC) ;
- bien qu'ici la membrane déformable soit en silicium, l'invention s'applique également à d'autres types de membranes comme par exemple une membrane en céramique;
- bien qu'ici le pourtour de la membrane déformable soit défini par un renflement annulaire, l'invention s'applique également à un pourtour formé différemment comme par exemple une paroi de section rectangulaire ou des entretoises périphériques collés au substrat et/ou à la membrane ;
- bien qu'ici le capteur comprenne deux deuxièmes canaux internes amenant le fluide sous pression depuis le premier canal traversant le support jusqu'à la membrane déformable, l'invention s'applique également à un unique deuxième canal interne d'amenée du fluide sous pression jusqu'à la membrane déformable ou à plus de deux canaux ;
- bien qu'ici, l'unité de traitement soit un ASIC situé sur la première face du support, l'invention s'applique également à d'autres moyens de traitement comme par exemple un microcontrôleur, celui-ci pouvant être situé sur l'une quelconque des faces du support;
- bien qu'ici, les liaisons électriques de l'unité de traitement au capteur capacitif et au module Bluetooth comprennent des pistes conductrices internes imprimées sur le support et de fils conducteurs, l'invention s'applique également à d'autres moyens de raccordement pouvant comprendre par exemple des pistes conductrices internes s'étendant dans les membranes déformables ;
- bien qu'ici l'unité de traitement soit reliée à un module Bluetooth, l'invention s'applique également à d'autres moyens de communication sans fil comme par exemple des moyens de communication wifi, par onde radio ou par infrarouge ;
- bien qu'ici l'unité de traitement 7 émette une alerte d'intégrité lorsque la différence entre les valeurs de pression mesurée par chaque capteur est supérieure à un seuil prédéfini, le procédé selon l'invention s'applique également à d'autres types de faits générateurs d'une alerte d'intégrité comme par exemple comme par exemple une variation de la valeur mesurée par un des capteurs qui ne serait pas enregistrée par l'autre capteur ou une différence de temps de réaction des capteurs supérieure à une valeur prédéterminée.

## Revendications

1. Dispositif (1) de mesure de pression comprenant un capteur de pression d'un premier type (2) et un capteur de pression d'un deuxième type (3) différent du premier montés sur un support commun (6) pour être soumis à une même pression à mesurer, dans lequel le capteur de pression du premier type (2) est de type capacitif, **caractérisé en ce que** le capteur de pression du premier type (2) comprend une base (20) solidaire du support (6) et en saillie de laquelle s'étend un pied (21) qui rejoint une première face (22) d'un substrat (23), le capteur de pression du premier type (2) comprend également au moins une membrane (26) et un premier canal interne (30) traversant le support commun (6), la base (20) ainsi que le pied (21) et le substrat (23),
une première enceinte (32) étant conjointement délimitée par une deuxième face (24) du substrat (23) opposée à la première face (22), par une première face de la membrane (26) et un renflement périphérique (28) de la membrane (26),
une deuxième enceinte (35) étant délimitée par le renflement périphérique (28), un couvercle (34) qui repose sur le renflement périphérique (28) et une deuxième face de la membrane (26) opposée à la première face de la membrane (26),
le capteur de pression du premier type (2) comprenant un deuxième canal interne (33) d'amenée d'un fluide depuis la première enceinte (32) vers la deuxième enceinte (35) qui est en lien fluidique avec le premier canal interne (30) et débouche dans la deuxième enceinte (35), le deuxième canal interne (33) s'étendant au travers du renflement périphérique (28), et
le capteur de pression du premier type comprenant une première électrode (25) solidaire de la deuxième face de la membrane (26) et une deuxième électrode (27) portée par le couvercle (34) et qui s'étend en regard de la première électrode (25).

2. Dispositif (1) selon la revendication 1, dans lequel le capteur de pression du deuxième type (3) est de type résistif.

3. Dispositif (1) selon la revendication 1, dans lequel le capteur de pression du premier type (2) et le capteur de pression du deuxième type (3) ont des modes de défaillance différents.

4. Dispositif (1) selon la revendication 1, dans lequel le capteur de pression du premier type (2) et le capteur de pression du deuxième type (3) ont des plages de précision différentes.

5. Dispositif (1) selon la revendication 1, comprenant une unité de traitement (7) montée sur le support commun (6) et reliée aux capteurs de pression (2; 3) .

6. Dispositif (1) selon la revendication, 1 dans lequel le capteur de pression du premier type (2) et le capteur de pression du deuxième type (3) sont montés respectivement sur des faces opposées (4, 5) du support commun (6).

7. Dispositif (1) selon la revendication 1, dans lequel une des faces (4) du support commun (6) comprend au moins une portion recouverte de parylène.

8. Dispositif (1) selon la revendication 1 dans lequel un des capteurs de pression (2 ; 3) est enfermé sous un couvercle hermétique (36) solidaire du support commun (6).

9. Dispositif (1) selon la revendication 1, dans lequel un des capteurs de pression (2 ; 3) est relié à des moyens de communication sans fil (16).

10. Procédé de calibrage d'un dispositif (1) de mesure de pression selon la revendication 1, le procédé comprenant l'étape (52) de comparer la mesure faite par un des capteurs (2, 3) avec une mesure de la même pression faite par l'autre capteur (2, 3).

11. Procédé selon la revendication 10, dans lequel la valeur de la pression mesurée par l'un des capteurs (2 ; 3) est utilisée pour recaler le zéro de l'autre capteur.

12. Procédé selon l'une des revendications 10 ou 11, comprenant l'étape supplémentaire (56) d'émettre une alerte d'intégrité.

## Patentansprüche

1. Druckmessvorrichtung (1), umfassend einen Drucksensor (2) vom ersten Typ und einen sich vom ersten Typ unterscheidenden Drucksensor (3) vom zweiten Typ, die an einem gemeinsamen Träger (6) montiert sind, um einem selben zu messenden Druck ausgesetzt zu sein, bei der der Drucksensor (2) vom ersten Typ kapazitiver Art ist, **dadurch gekennzeichnet, dass** der Drucksensor (2) vom ersten Typ eine Basis (20) umfasst, die fest mit dem Träger (6) verbunden ist und von der ein Fuß (21) vorsteht, der auf eine erste Fläche (22) eines Substrats (23) trifft, wobei der Drucksensor (2) vom ersten Typ ferner mindestens eine Membran (26) und einen ersten Innenkanal (30) umfasst, der den gemeinsamen Träger (6), die Basis (20) sowie den Fuß (21) und das Substrat (23) durchsetzt,
wobei eine erste Einfassung (32) gemeinsam durch eine zweite Fläche (24) des Substrats (23), die der ersten Fläche (22) entgegengesetzt ist, durch eine erste Fläche der Membran (26) und eine Umfangswulst (28) der Membran (26) begrenzt ist,
wobei eine zweite Einfassung (35) von der Umfangswulst (28), einer Abdeckung (34), die auf der Umfangswulst (28) ruht, und einer zweiten Fläche der Membran (26), die der ersten Fläche der Membran (26) entgegengesetzt ist, begrenzt ist,
wobei der Drucksensor (2) vom ersten Typ einen zweiten Innenkanal (33) zum Zuführen eines Fluids von der ersten Einfassung (32) in Richtung der zweiten Einfassung (35) umfasst, der in Fluidverbindung mit dem ersten Innenkanal (30) steht und in die zweite Einfassung (35) mündet, wobei der zweite Innenkanal (33) durch die Umfangswulst (28) verläuft, und wobei der Drucksensor vom ersten Typ eine erste Elektrode (25) umfasst, die fest mit der zweiten Fläche der Membran (26) verbunden ist, und eine zweite Elektrode (27), die von der Abdeckung (34) getragen wird und sich gegenüber der ersten Elektrode (25) erstreckt.

2. Vorrichtung (1) nach Anspruch 1, bei der der Drucksensor (3) vom ersten Typ resistiv ist.

3. Vorrichtung (1) nach Anspruch 1, bei der der Drucksensor (2) vom ersten Typ und der Drucksensor (3) vom zweiten Typ unterschiedliche Ausfallmodi haben.

4. Vorrichtung (1) nach Anspruch 1, bei der der Drucksensor (2) vom ersten Typ und der Drucksensor (3) vom zweiten Typ unterschiedliche Genauigkeitsbereiche haben.

5. Vorrichtung (1) nach Anspruch 1, umfassend eine Verarbeitungseinheit (7), die an dem gemeinsamen Träger (6) montiert und mit den Drucksensoren (2; 3) verbunden ist.

6. Vorrichtung (1) nach Anspruch 1, bei der der Drucksensor (2) vom ersten Typ und der Drucksensor (3) vom zweiten Typ jeweils auf einander abgewandten Flächen (4, 5) des gemeinsamen Trägers (6) montiert sind.

7. Vorrichtung (1) nach Anspruch 1, bei der eine der Flächen (4) des gemeinsamen Trägers (6) mindestens einen Abschnitt umfasst, der mit Parylene überzogen ist.

8. Vorrichtung (1) nach Anspruch 1, bei der einer der Drucksensoren (2; 3) unter einer hermetisch abgeschlossenen Abdeckung (36) eingeschlossen ist, die fest mit dem gemeinsamen Träger (6) verbunden ist.

9. Vorrichtung (1) nach Anspruch 1, bei der einer der Drucksensoren (2; 3) mit drahtlosen Kommunikationsmitteln (16) verbunden ist.

10. Verfahren zum Kalibrieren einer Druckmessvorrichtung (1) nach Anspruch 1, wobei das Verfahren den Schritt (52) des Vergleichens der von einem der Sensoren (2, 3) vorgenommenen Messung mit einer von dem anderen Sensor (2, 3) vorgenommenen Messung des gleichen Druckes umfasst.

11. Verfahren nach Anspruch 10, bei dem der Wert des von einem der Sensoren (2; 3) gemessenen Wertes verwendet wird, um den anderen Sensor auf null zurückzusetzen.

12. Verfahren nach einem der Ansprüche 10 oder 11, umfassend den zusätzlichen Schritt (56) des Aussendens einer Integritätswarnung.

## Claims

1. A pressure measurement device (1) comprising a pressure sensor (2) of a first type and a pressure sensor (3) of a second type different from the first, which sensors are mounted on a common support (6) in order to be subjected to the same pressure to be measured, in which the pressure sensor (2) of the first type is of the capacitive type, the device being **characterized in that** the pressure sensor (2) of the first type comprises a base (20) secured to the common support (6) and in projection from which protrudes a foot (21) that links to a first face (22) of a substrate (23), the pressure sensor (2) of the first type also comprising at least one membrane (26) and a first internal channel (30) passing through the common support (6), the base (20), the foot (21) and the substrate(23) a first sealed enclosure being jointly delimited by a second face (24) of the substrate (23) opposite to the first face (22), by a first face of the membrane (26) and a peripheral bulge (28) of the membrane (26) ,
a second enclosure (35) being delimited by the peripheral bulge (28), a cover that is based on the peripheral bulge (28) and a second face of the membrane (26) opposed to the first face of the membrane (26)
the pressure sensor of the first type (2) comprising a second internal channel (33) bringing a fluid from first enclosure (32) to second enclosure (35) which is in fluid flow connection with the first internal channel (30) and leading into the second sealed enclosure (35), the second internal channel (33) extending through the peripheral bulge (28), and the pressure sensor of the first type comprising a first electrode (25) secured to the second face of the membrane (26) and a second electrode (27) carried by the cover (34) and that extends opposite to first electrode (25)

2. A device (1) according to claim 1, wherein the pressure sensor (3) of the second type is of the resistive type.

3. A device (1) according to claim 1, wherein the pressure sensor (2) of the first type and the pressure sensor (3) of the second type have different failure modes.

4. A device (1) according to claim 1, wherein the pressure sensor (2) of the first type and the pressure sensor (3) of the second type have different accuracy ranges.

5. A device (1) according to claim 1, including a processor unit (7) mounted on the common support (6) and connected to the pressure sensors (2; 3).

6. A device (1) according to claim 1, wherein the pressure sensor (2) of the first type and the pressure sensor (3) of the second type are mounted on respective opposite faces (4, 5) of the common support (6).

7. A device (1) according to claim 1, wherein one of the faces (4) of the common support (6) includes at least one portion covered in parylene.

8. A device (1) according to claim 1, wherein one of the pressure sensors (2; 3) is enclosed under a hermetic cover (36) secured to the common support (6).

9. A device (1) according to claim 1, wherein one of the pressure sensors (2; 3) is connected to wireless communication means (16).

10. A method of calibrating a pressure measurement device (1) having at least one pressure sensor (2) of a first type and at least one pressure sensor (3) of a second type mounted on a single support (6), the method comprising a step (52) of comparing the measurement taken by one of the sensors (2, 3) with a measurement of the same pressure taken by the other sensor (2, 3).

11. A method according to claim 10, wherein the value of the pressure measured by one of the sensors (2; 3) is used to reset the zero of the other sensor.

12. A method according to any of claim 10 to 13, including an additional step (56) of issuing an integrity alert.
